# EUROPEAN PATENT APPLICATION

(11) **EP 4 818 991 A1**
(43) Date of publication of application: **07.10.2026**
(21) Application number: 23960152.9
(22) Date of filing: 29.11.2023
(51) Int. Cl.: G06N 10/70

(54) **QUANTUM ERROR CORRECTION CODE EVALUATION PROGRAM, QUANTUM ERROR CORRECTION CODE EVALUATION METHOD, AND INFORMATION PROCESSING DEVICE**

(71) Applicant: FUJITSU LIMITED, Kawasaki-shi, Kanagawa 211-8588 (JP)
(72) Inventor: KATSUDA, Mitsuki, Kawasaki-shi, Kanagawa 211-8588 (JP)
(74) Representative: Haseltine Lake Kempner LLP
(86) International application number: PCT/JP2023/042762
(87) International publication number: WO 2025/115132

(57) **Abstract**

A computational load for evaluating a quantum error-correcting code is reduced.

An information processing apparatus (10) generates, based on input-output information (4) indicating a correspondence between an input state and an output state including an influence of noise in a syndrome measurement of a second quantum error-correcting code (3), a first map (5) that transforms the input state into the output state. The information processing apparatus (10) generates a second map (6) by extracting a magnitude of the influence exerted by the noise from the first map (5), and generates a first quantum error-correcting code (8) formed of a plurality of second quantum error-correcting codes (3). The information processing apparatus (10) applies the noise generated in accordance with the second map (6) to each of the second quantum error-correcting codes (3) forming the first quantum error-correcting code (8), and evaluates an error-correcting performance of the first quantum error-correcting code (8) against a quantum error caused by the influence of the noise.

## Description

### Technical Field

The embodiments discussed herein relate to a quantum error-correcting code evaluation program, a quantum error-correcting code evaluation method, and an information processing apparatus.

### Background Art

Qubits installed in a quantum computer are exposed to various types of noise. Qubits easily lose their quantum properties due to quantum errors (physical errors) caused by the influence of noise. Therefore, it is important to establish quantum error correction techniques.

Quantum error correction is a procedure for correcting physical errors occurring in a plurality of qubits used for redundancy. More specifically, in the quantum error correction, the quantum state of a single qubit (logical qubit) is redundantly encoded such that the quantum state is represented by a plurality of qubits. If a physical error occurs in at least one of the plurality of qubits used for the redundant encoding, the location of the physical error is detected and the error that has occurred is corrected via the quantum error correction.

If quantum errors are corrected successfully via quantum error correction, the quantum state of a logical qubit is protected from the influence of the quantum errors. On the other hand, if the quantum errors are not corrected, the quantum state of the logical qubit becomes an incorrect state (logical error), which leads to a failure in correct quantum computation.

A specific method for quantum error correction is referred to as a quantum error-correcting code. The performance of a quantum error-correcting code is estimated based on the probability of failure in error correction. For example, for a quantum error-correcting code, the relationship between a physical error occurrence probability and a logical error occurrence probability under a certain noise model is investigated.

Examples of the noise model used for evaluating the performance of quantum error-correcting codes include a code-capacity model, a phenomenological model, and a circuit-level model. However, in analysis using these noise models, it is not possible to incorporate the influence of noise that continuously acts simultaneously with the execution of quantum gates. To address this, an analysis method using a quantum master equation may be employed.

A method using a quantum master equation is a method of calculating the time evolution of a quantum state of an open quantum system by solving a differential equation defined by a Hamiltonian and relaxation operators. By solving the above equation for a plurality of initial states, it becomes possible to obtain a complete-positive trace preserving (CPTP) map, which represents an input-output relationship of quantum states. Analysis using the quantum master equation makes it possible to accurately incorporate the influence of noise derived from relaxation or residual interactions compared to a circuit-level model or another.

As a technique related to quantum error correction, for example, a simulation method for efficiently determining presence or absence of occurrence of a logical error has been proposed. Further, a technique for optimizing physical parameters in fault-tolerant quantum computing to reduce frequency crowding has also been proposed. Still further, a technique for correcting quantum errors in one or more physical qubits among a plurality of physical qubits based on a measurement from one flag qubit has also been proposed.

### Citation List

### Patent Literature

PTL1: International Publication Pamphlet No. WO 2023-089831
PTL2: Japanese Laid-open Patent Publication No. 2021-192324
PTL3: U.S. Patent Application Publication No. 2021/0019223

### Summary of Invention

### Technical Problem

While analysis using a quantum master equation makes it possible to accurately incorporate the influence of noise, the computation time increases exponentially with respect to the number of qubits in a quantum circuit to be analyzed. Therefore, in related art, it is difficult to evaluate the quantum error-correcting performance of a large-scale system while accurately reflecting the influence of noise.

In one aspect, the present disclosure aims to reduce a computational load for evaluating a quantum error-correcting code.

### Solution to Problem

In one aspect, there is provided a quantum error-correcting code evaluation program that causes a computer to perform the following process.

The computer generates, based on input-output information indicating a correspondence between an input state and an output state including an influence of noise in a syndrome measurement of a second quantum error-correcting code, a first map that transforms the input state for the syndrome measurement into the output state, the second quantum error-correcting code having a configuration identical to a configuration of a part of a first quantum error-correcting code to be evaluated. The computer generates a second map by extracting a magnitude of the influence exerted by the noise from the first map. The computer generates the first quantum error-correcting code formed of a plurality of second quantum error-correcting codes. Then, the computer applies the noise generated in accordance with the second map to each of the second quantum error-correcting codes forming the first quantum error-correcting code, and evaluates an error-correcting performance of the first quantum error-correcting code against a quantum error caused by an influence of the noise.

### Advantageous Effects of Invention

According to one aspect, it is possible to reduce a computational load for evaluating a quantum error-correcting code.

The foregoing and other objects, features, and advantages of the present disclosure will become apparent from the following description of preferred embodiments, when read together with the accompany drawings.

### Brief Description of Drawings

[FIG. 1] FIG. 1 illustrates an example of a quantum error-correcting code evaluation method according to a first embodiment.
[FIG. 2] FIG. 2 illustrates an example of a configuration of a computer system.
[FIG. 3] FIG. 3 illustrates an example of hardware of a classical computer for quantum error-correcting code evaluation.
[FIG. 4] FIG. 4 illustrates an example of a surface code.
[FIG. 5] FIG. 5 illustrates an example of a syndrome measurement circuit.
[FIG. 6] FIG. 6 illustrates an example of a code-capacity model.
[FIG. 7] FIG. 7 illustrates an example of a phenomenological model.
[FIG. 8] FIG. 8 illustrates an example of a circuit-level model.
[FIG. 9] FIG. 9 illustrates an example of a continuous-variable error.
[FIG. 10] FIG. 10 illustrates an example of residual interactions.
[FIG. 11] FIG. 11 illustrates an example of a CPTP map representing the operation of a syndrome measurement circuit.
[FIG. 12] FIG. 12 illustrates an example of a [[4,2,2]] code.
[FIG. 13] FIG. 13 illustrates an example of a syndrome measurement circuit for a [[4,2,2]] code in which a measurement qubit for X stabilizer measurement is located at the center.
[FIG. 14] FIG. 14 illustrates an example of a syndrome measurement circuit for a [[4,2,2]] code in which a measurement qubit for Z stabilizer measurement is located at the center.
[FIG. 15] FIG. 15 is a block diagram illustrating an example of functions of a classical computer.
[FIG. 16] FIG. 16 illustrates an example procedure of a quantum error-correcting code evaluation process.
[FIG. 17] FIG. 17 is a flowchart illustrating an example procedure of a CPTP map generation process.
[FIG. 18] FIG. 18 is a flowchart illustrating an example procedure of a seven-qubit noise model generation process.
[FIG. 19] FIG. 19 illustrates an example of a Pauli channel.
[FIG. 20] FIG. 20 illustrates an example of a correction circuit for a five-qubit repetition code.
[FIG. 21] FIG. 21 illustrates an example of a pulse schedule for actual device operations.
[FIG. 22] FIG. 22 illustrates an example of calculated Pauli error occurrence probabilities.
[FIG. 23] FIG. 23 illustrates an example of a surface code represented by a set of [[4,2,2]] codes in which a measurement qubit for X stabilizer measurement is located at the center.
[FIG. 24] FIG. 24 illustrates an example of a surface code represented by a set of [[4,2,2]] codes in which a measurement qubit for Z stabilizer measurement is located at the center.
[FIG. 25] FIG. 25 illustrates an example of generated bit-flip errors.
[FIG. 26] FIG. 26 is a flowchart illustrating an example procedure of a surface code simulation.
[FIG. 27] FIG. 27 illustrates an example of a logical error occurrence state.
[FIG. 28] FIG. 28 illustrates the relationships between physical error rates and logical error rates.

### Description of Embodiments

Hereinafter, embodiments will be described with reference to the drawings. A plurality of embodiments may be combined unless they exclude each other.

### [First Embodiment]

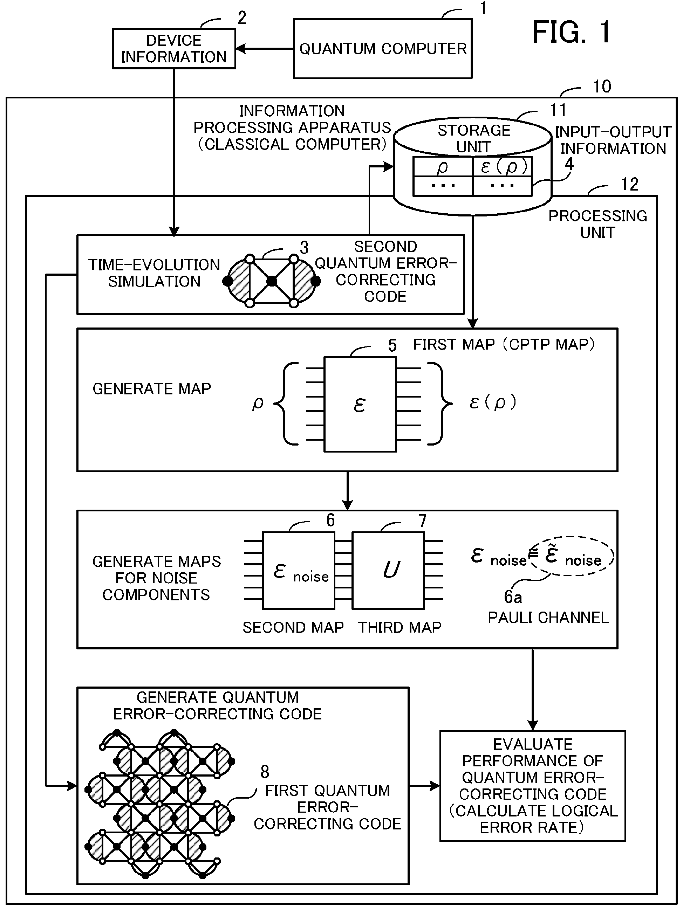

FIG. 1 illustrates an example of a quantum error-correcting code evaluation method according to a first embodiment. FIG. 1 illustrates an information processing apparatus 10 that executes the quantum error-correcting code evaluation method. The information processing apparatus 10 executes the quantum error-correcting code evaluation method by executing, for example, a quantum error-correcting code evaluation program.

The information processing apparatus 10 includes a storage unit 11 and a processing unit 12. The storage unit 11 is, for example, a memory or a storage device included in the information processing apparatus 10. The processing unit 12 is, for example, a processor or an arithmetic circuit included in the information processing apparatus 10.

The storage unit 11 stores, for example, input-output information 4 indicating the correspondences between input states and output states including the influence of noise in syndrome measurement of a second quantum error-correcting code 3 having a configuration identical to that of a part of a first quantum error-correcting code 8 to be evaluated. The first quantum error-correcting code 8 to be evaluated is, for example, a surface code. The second quantum error-correcting code 3 is, for example, a [[4,2,2]] code having a configuration identical to that of a part of the surface code.

The processing unit 12 evaluates the performance of the first quantum error-correcting code 8 to be evaluated. For example, the processing unit 12 acquires the input-output information 4 by performing a time-evolution simulation that simulates the syndrome measurement of the second quantum error-correcting code 3 on a quantum computer 1. For example, the processing unit 12 receives, as an input, device information 2 regarding noise that occurs in the quantum computer 1, and performs a precise time-evolution simulation using the device information 2. The device information 2 is, for example, values of parameters included in a differential equation used in the time-evolution simulation.

The processing unit 12 generates, based on the input-output information 4, a first map 5 that transforms an input state for the syndrome measurement into an output state. For example, the processing unit 12 generates the first map 5 by analysis using a quantum master equation. The first map 5 is, for example, a CPTP map. The first map 5 is decomposed into a second map 6 representing the magnitude of the influence of noise, and a third map 7 representing a noise-free syndrome measurement. The second map 6 and the third map 7 are, for example, CPTP maps.

The processing unit 12 generates the second map 6 by extracting the magnitude of the influence exerted by the noise from the first map 5. For example, the processing unit 12 generates the second map 6 by applying an inverse operation of the syndrome measurement to the first map 5. At this time, the processing unit 12 may approximate the second map 6 as a Pauli channel 6a representing a process in which stochastic Pauli errors are applied.

The processing unit 12 also generates the first quantum error-correcting code 8 formed of a plurality of second quantum error-correcting codes 3. Then, the processing unit 12 applies noise, generated in accordance with the second map 6, to each of the second quantum error-correcting codes 3 forming the first quantum error-correcting code 8, and evaluates the error-correcting performance of the first quantum error-correcting code 8 against quantum errors caused by the influence of the noise.

For example, in the case where the second map 6 is approximated as the Pauli channel 6a, the processing unit 12 calculates the occurrence probabilities of Pauli errors caused by noise in each of the plurality of second quantum error-correcting codes 3 based on the Pauli channel 6a. Then, the processing unit 12 evaluates the performance of the first quantum error-correcting code 8 based on whether a logical error occurs when Pauli errors are applied to qubits included in the first quantum error-correcting code 8 according to the calculated occurrence probabilities of Pauli errors. For example, as an indicator indicating the performance of the first quantum error-correcting code 8, the processing unit 12 calculates a logical error rate in error correction using the first quantum error-correcting code 8.

With the above-described quantum error-correcting code evaluation method, the processing unit 12 is able to obtain, based on the input-output information 4, the second map 6 regarding noise components generated in the syndrome measurement of the second quantum error-correcting code 3. The second quantum error-correcting code 3 is smaller in scale than the first quantum error-correcting code 8, and thus a computational load for obtaining the second map 6 is small.

The use of the second map 6 makes it easy to apply noise to the second quantum error-correcting code 3 forming the first quantum error-correcting code 8 with a small computational load. Therefore, the processing unit 12 is able to evaluate the error-correcting performance of the first quantum error-correcting code 8 with a small computational load. That is, with the quantum error-correcting code evaluation method of the first embodiment, it is possible to reduce the computational load for evaluating the first quantum error-correcting code.

Note that the input-output information 4 is obtained by a time-evolution simulation of the syndrome measurement of the second quantum error-correcting code 3. Since the second quantum error-correcting code 3 is smaller in scale than the first quantum error-correcting code 8, the computational load for the time-evolution simulation is small accordingly. Therefore, it is possible to perform a precise time-evolution simulation using a quantum master equation that more accurately incorporates the influence of noise derived from relaxation or residual interactions. Therefore, an output state including the influence of noise derived from relaxation or residual interactions is obtained as an output state included in the input-output information 4. As a result, the processing unit 12 is able to evaluate the first quantum error-correcting code 8 with high accuracy while incorporating the influence of noise derived from relaxation or residual interactions.

Further, the processing unit 12 approximates the second map 6 as the Pauli channel 6a, which makes it easy to apply Pauli errors caused by the influence of noise that occurs to the first quantum error-correcting code 8. This contributes to a reduction in the computational load for evaluating the first quantum error-correcting code 8. For example, the processing unit 12 is able to easily calculate the occurrence probabilities of Pauli errors based on the Pauli channel 6a. As a result, the processing unit 12 is able to easily evaluate the first quantum error-correcting code 8 based on whether a logical error occurs when Pauli errors are applied to qubits included in the first quantum error-correcting code 8 according to the calculated occurrence probabilities of Pauli errors.

Further, in the case where a surface code is used as the first quantum error-correcting code 8 to be evaluated, the processing unit 12 may use a [[4,2,2]] code as the second quantum error-correcting code 3, which makes it easy to generate the first quantum error-correcting code 8 formed of a plurality of second quantum error-correcting codes 3.

### [Second Embodiment]

A second embodiment relates to a computer system for evaluating the performance of a surface code with a small computational load. The surface code is also referred to as a topological surface code. In recent years, a surface code has attracted attention because of its high error-correcting performance and ease of implementation.

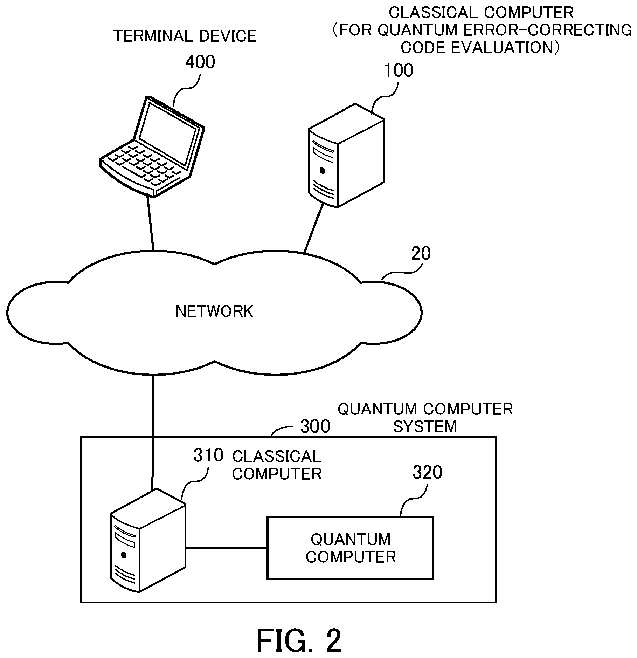

FIG. 2 illustrates an example of a configuration of a computer system. A quantum computer system 300 includes a classical computer 310 and a quantum computer 320. The classical computer 310 is a conventional computer also referred to as a von Neumann computer. The classical computer 310 controls the quantum computer 320 to perform quantum computation. The quantum computer 320 is a computer that applies principles of quantum mechanics to computation. The quantum computer 320 is a quantum gate-based computer using, for example, a superconducting circuit, a trapped ion, a diamond-based quantum device, or the like.

A terminal device 400 and a classical computer 100 for quantum error-correcting code evaluation are connected to the classical computer 310 via a network 20. The terminal device 400 is a computer used by a user who requests quantum computation performed by the quantum computer system 300. Like the classical computer 310, the classical computer 100 is also a von Neumann computer. The classical computer 100 performs an error correction simulation of a quantum error-correcting code that is applied to quantum computation in the quantum computer system 300, and evaluates the reliability.

The classical computer 310 receives a quantum circuit from the terminal device 400. The quantum circuit represents a sequence of operations to be performed on qubits using an arrangement of elements such as gates. A qubit is a bit capable of representing a superposition state of the "0" state and the "1" state.

The classical computer 310 instructs the quantum computer 320 to control the qubits in accordance with the quantum circuit received from the terminal device 400. The classical computer 310 acquires the measurement result of each qubit from the quantum computer 320. The quantum computer 320 includes a plurality of qubits and a device for manipulating each of the plurality of qubits.

For example, the classical computer 100 evaluates the quantum error-correcting performance in the case where quantum error correction based on a surface code is applied to quantum computation in the quantum computer 320, using parameters indicating the characteristics of the quantum computer 320.

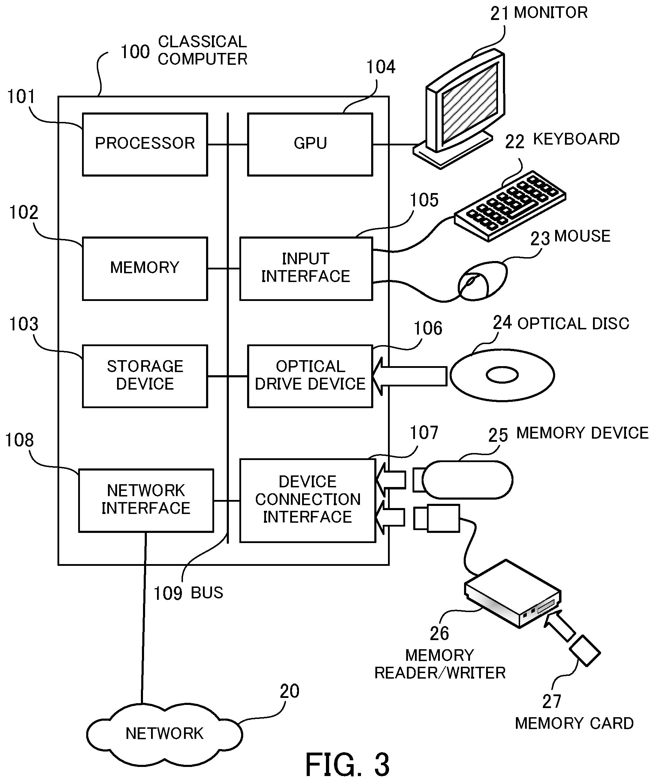

FIG. 3 illustrates an example of hardware of a classical computer for quantum error-correcting code evaluation. The classical computer 100 is entirely controlled by a processor 101. A memory 102 and a plurality of peripheral devices are connected to the processor 101 via a bus 109. The processor 101 may be a multiprocessor. The processor 101 is, for example, a central processing unit (CPU), a micro processing unit (MPU), or a digital signal processor (DSP). At least part of the functions implemented by the processor 101 executing the program may be implemented by an electronic circuit such as an application specific integrated circuit (ASIC) or a programmable logic device (PLD).

The memory 102 is used as a main storage device of the classical computer 100. The memory 102 temporarily stores at least part of an operating system (OS) program and application programs to be executed by the processor 101. The memory 102 also stores various data used by the processor 101 during its operation. As the memory 102, for example, a volatile semiconductor storage device such as a random access memory (RAM) is used.

The peripheral devices connected to the bus 109 include a storage device 103, a graphics processing unit (GPU) 104, an input interface 105, an optical drive device 106, a device connection interface 107, and a network interface 108.

The storage device 103 electrically or magnetically writes and reads data to and from a built-in storage medium. The storage device 103 is used as an auxiliary storage device of the classical computer 100. The storage device 103 stores OS programs, application programs, and various data. As the storage device 103, for example, a hard disk drive (HDD) or a solid state drive (SSD) may be used.

The GPU 104 is an arithmetic device that performs image processing. The GPU 104 is an example of a graphic controller. A monitor 21 is connected to the GPU 104. The GPU 104 displays images on the screen of the monitor 21 in accordance with instructions from the processor 101. The monitor 21 is a display device using organic electro luminescence (EL), a liquid crystal display device, or another.

A keyboard 22 and a mouse 23 are connected to the input interface 105. The input interface 105 transmits signals received from the keyboard 22 and the mouse 23 to the processor 101. The mouse 23 is an example of a pointing device, and other pointing devices may be used. Other pointing devices include a touch panel, a tablet, a touch pad, and a track ball.

The optical drive device 106 reads data from an optical disc 24 or writes data to the optical disc 24 using laser light or the like. The optical disc 24 is a portable storage medium on which data is recorded so as to be readable by reflection of light. The optical disc 24 may be a digital versatile disc (DVD), a DVD-RAM, a compact disc read only memory (CD-ROM), a CD-recordable (CD-R)/CD-rewritable (CD-RW), or the like.

The device connection interface 107 is a communication interface for connecting peripheral devices to the classical computer 100. For example, a memory device 25 and a memory reader/writer 26 may be connected to the device connection interface 107. The memory device 25 is a storage medium having a function of communicating with the device connection interface 107. The memory reader/writer 26 is a device that writes data to a memory card 27 or reads data from the memory card 27. The memory card 27 is a card-type storage medium.

The network interface 108 is connected to the network 20. The network interface 108 transmits and receives data to and from other computers or communication devices via the network 20. The network interface 108 is a wired communication interface connected to a wired communication device such as a switch or a router via a cable. Alternatively, the network interface 108 may be a wireless communication interface communicatively connected to a wireless communication device such as a base station or an access point by radio waves.

The classical computer 100 having the hardware as described above is able to implement the processing functions of the second embodiment. The information processing apparatus 10 described in the first embodiment may also be configured with hardware similar to that of the classical computer 100 illustrated in FIG. 3.

The classical computer 100 implements the processing functions of the second embodiment by executing a program recorded on a computer-readable storage medium, for example. The program describing the processing contents to be executed by the classical computer 100 may be recorded on various storage media. For example, a program to be executed by the classical computer 100 may be stored in the storage device 103. The processor 101 loads at least part of a program from the storage device 103 into the memory 102 and executes the program. The program to be executed by the classical computer 100 may be recorded on a portable storage medium such as the optical disc 24, the memory device 25, or the memory card 27. The program stored in the portable storage medium becomes executable after being installed in the storage device 103 under the control of the processor 101, for example. Alternatively, the processor 101 may read the program directly from the portable storage medium and execute the program.

In the above-described system, the classical computer 100 evaluates a quantum error-correcting code. As the quantum error-correcting code, for example, a surface code is used.

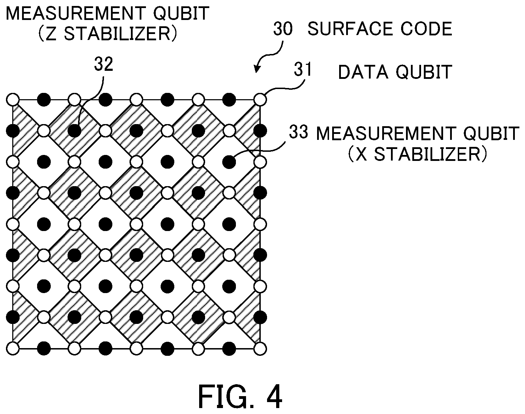

FIG. 4 illustrates an example of a surface code. A surface code 30 is a quantum error-correcting code that implements quantum error correction by arranging qubits on a two-dimensional square lattice and causing interactions between adjacent qubits.

Qubits constituting the surface code 30 are illustrated as circles. White circles represent data qubits (for example, data qubits 31) in which quantum information is written. Black circles represent measurement qubits (for example, measurement qubits 32 and 33) for error detection. Measurement qubits arranged at the centers of hatched rectangular regions, such as the measurement qubit 32, are used for Z stabilizer measurement. Measurement qubits arranged at the centers of white rectangular regions, such as the measurement qubit 33, are used for X stabilizer measurement.

A data qubit and a measurement qubit interact with each other through a quantum circuit called a syndrome measurement circuit. In the case where an error occurs in a data qubit, an eigenvalue indicated by a measurement result of its adjacent measurement qubit is inverted from "+1" to "-1". The measurement result of the measurement qubit is referred to as a syndrome.

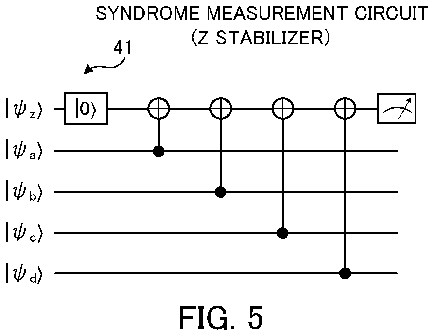

FIG. 5 illustrates an example of a syndrome measurement circuit. A syndrome measurement circuit 41 illustrated in FIG. 5 is a quantum circuit for Z stabilizer measurement. In the syndrome measurement circuit 41, five qubits are set as operation targets. The first qubit of the syndrome measurement circuit 41 corresponds to a measurement qubit for Z stabilizer measurement. The other four qubits of the syndrome measurement circuit 41 correspond to four data qubits surrounding the measurement qubit. |ψ_{z}〉 represents the state of a measurement qubit. |ψₐ〉, |ψ_{b}〉, |ψ_{c}〉, |ψ_{d}〉, ... represent the states of data qubits.

In the syndrome measurement circuit 41, first, the state of the measurement qubit is initialized to |0〉 (a state in which an eigenvalue of Z is "1"). Thereafter, the gate operations of CNOT gates are performed between the measurement qubit and each of the other four data qubits. In each CNOT gate, the data qubit is a control qubit and the measurement qubit is a target qubit.

The performance of a surface code is estimated based on the probability of failure in quantum error correction (logical error probability P_{L}). The higher a physical error probability P is, the higher the probability of failure in quantum error correction is. The physical error probability P depends on an occurrence state of noise that occurs in the quantum computer 320. Therefore, as an indicator indicating the performance of the surface code, the relationship between the physical error probability P and the logical error probability P_{L} is investigated under an idealized noise model.

Examples of the noise model used for evaluating the performance of a surface code include a code-capacity model, a phenomenological model, and a circuit-level model.

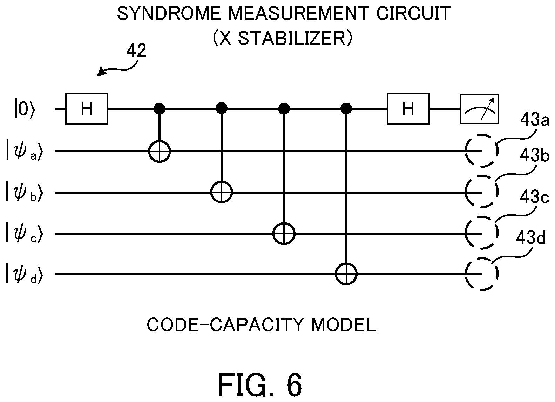

FIG. 6 illustrates an example of a code-capacity model. The code-capacity model illustrated in FIG. 6 indicates a noise occurrence state in a syndrome measurement circuit 42 for X stabilizer measurement.

In the syndrome measurement circuit 42, five qubits are set as operation targets. The first qubit of the syndrome measurement circuit 42 corresponds to a measurement qubit for X stabilizer measurement. The other four qubits of the syndrome measurement circuit 42 correspond to four data qubits surrounding the measurement qubit.

In the syndrome measurement circuit 42, the gate operation of a Hadamard gate is performed on the measurement qubit initialized to |0〉. Thereafter, the gate operations of CNOT gates are performed between the measurement qubit and each of the other four data qubits. In each CNOT gate, the measurement qubit is a control qubit and the data qubit is a target qubit. Finally, the gate operation of a Hadamard gate is performed on the measurement qubit.

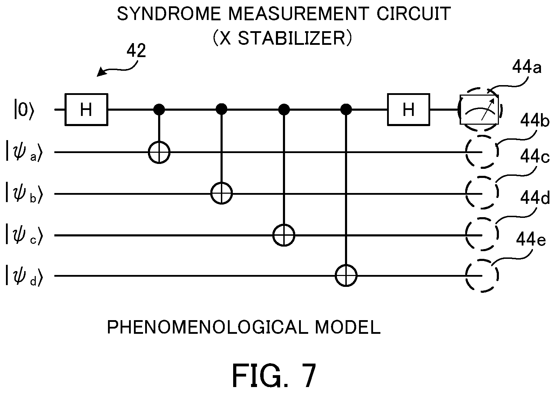

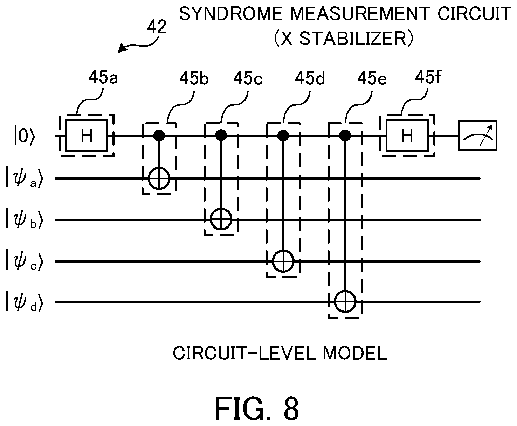

The code-capacity model is a model in which quantum errors occur only in the data qubits. In FIG. 6, error occurrence locations 43a to 43d are surrounded by broken lines (the same applies to FIGS. 7 and 8). The code-capacity model may be used as long as analysis is performed assuming only quantum errors in data qubits. However, in practice, a quantum error also occurs in a measurement qubit due to the influence of noise. Therefore, with the code-capacity model, it is not possible to accurately evaluate the performance of a surface code.

FIG. 7 illustrates an example of a phenomenological model. The phenomenological model is a model in which errors occur in data qubits and a syndrome measurement result. In the phenomenological model, the states of the qubits after gate operations correspond to error occurrence locations 44a to 44e.

Compared with the code-capacity model, the phenomenological model enables an analysis that incorporates the influence of noise in a syndrome measurement result. However, noise occurs during various situations including gate operations and measurements, and the phenomenological model is insufficient for analyzing the influence of such noise.

FIG. 8 illustrates an example of a circuit-level model. The circuit-level model is a model in which errors occur immediately after quantum gates in a syndrome measurement circuit. In the circuit-level model, portions where quantum gates are arranged correspond to error occurrence locations 45a to 45f.

In evaluating a surface code using the circuit-level model, the classical computer 100 applies a noise process obtained by modeling actual device noise, immediately after each of the quantum gates forming the syndrome measurement circuit 42, for example. Then, the classical computer 100 simulates how the influence of the noise propagates through the quantum gates. In this simulation, the classical computer 100 is also able to apply the noise process even during waiting periods in which no quantum gate is applied.

In the evaluation of the surface code using the circuit-level model, the influence of noise is approximately incorporated by applying the noise process after an ideal quantum gate. However, in actual quantum devices, noise continuously acts in parallel and simultaneously with the execution of quantum gates.

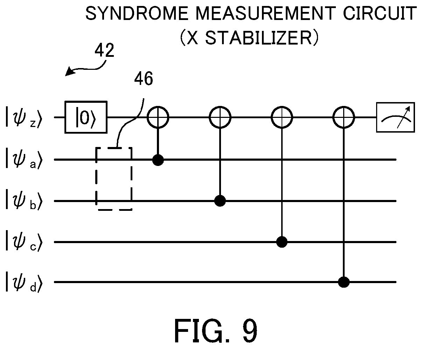

FIG. 9 illustrates an example of a continuous-variable error. In actual quantum devices, noise continuously occurs in parallel and simultaneously with the execution of quantum gates. As a result, even a location different from the locations of gate operations of quantum gates may be an error occurrence location 46. The error occurrence location 46 illustrated in FIG. 9 is merely an example, and an infinite number of such error occurrence locations appear. In evaluation using the circuit-level model, it is not possible to incorporate the influence of noise that continuously occurs in parallel and simultaneously with the execution of quantum gates.

In addition, for example, noise caused by residual interactions is also noise that the circuit-level model is not able to incorporate.

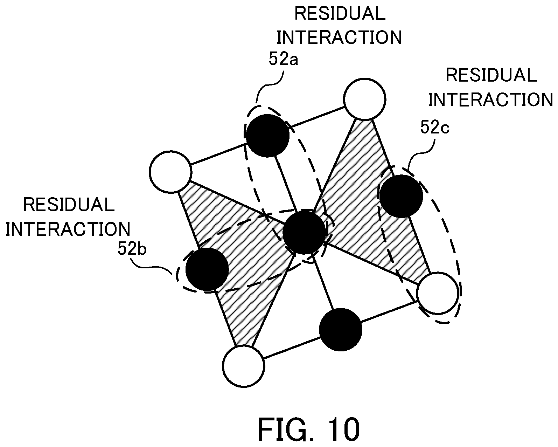

FIG. 10 illustrates an example of residual interactions. As illustrated in FIG. 10, residual interactions 52a, 52b, and 52c exist between adjacent qubits. The influence of noise derived from these residual interactions 52a, 52b, and 52c are not incorporated by the circuit-level model.

To address this, analysis using a quantum master equation may be considered. In an analysis using a quantum master equation, the time evolution of the state ρ of an open quantum system is calculated by solving a differential equation defined by a Hamiltonian H and a relaxation operator Lᵢ. The differential equation used in the quantum master equation is given as follows. $\frac{dρ \left(t\right)}{dt} = - i \left[H, ρ\right] + {\sum }_{i} {γ}_{i} \left({L}_{i}{ρL}_{i}^{†}-\frac{1}{2}\left\{{L}_{i}{L}_{i}^{†},ρ\right\}\right)$ (1)

In Expression (1), γᵢ denotes a relaxation rate, which is a value obtained from measurement results of an actual device. By solving the differential equation given by Expression (1) for a plurality of initial states, it is possible to obtain a CPTP map representing an input-output relationship of quantum states.

A CPTP map is a map used to represent quantum operations. The CPTP map provides an input-output relationship of quantum states. That is, by using the CPTP map, a probability distribution of output quantum states is obtained from input quantum states.

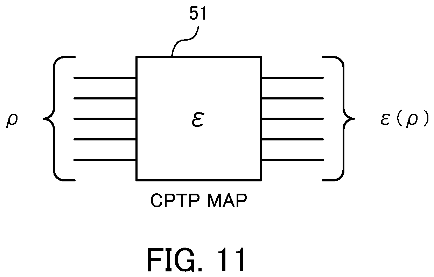

FIG. 11 illustrates an example of a CPTP map representing the operation of a syndrome measurement circuit. An output state ε(ρ) is obtained by applying a CPTP map 51 to an input state ρ, which is input to the syndrome measurement circuit.

Properties of CPTP maps include complete positivity and trace preservation. Complete positivity means that negative probabilities do not appear in an output distribution. Trace preservation means that the sum of probabilities is preserved before and after the input-output transformation.

The CPTP map is obtained, for example, by rigorous time-evolution simulations or based on experimental results obtained using an actual quantum device. For example, the CPTP map is obtained by investigating the input-output relationship for each of 4^{N} density operators (quantum states) (N denotes the number of qubits).

Evaluation of a surface code using the quantum master equation as described above enables more accurate incorporation of the influence of noise derived from relaxation or residual interactions than when the circuit-level model is used.

However, the computation time increases exponentially with respect to the number of qubits. Therefore, it is difficult to apply the evaluation of the surface code using the quantum master equation to large-scale systems.

As described above, a problem in evaluation using the circuit-based model is that it is not possible to incorporate the influence of noise that continuously acts in parallel and simultaneously with the execution of quantum gates. On the other hand, a problem in evaluation based on the quantum master equation is that the computation time increases as the size of a target system increases.

Therefore, attention is focused on a part of a surface code. For example, the classical computer 100 performs a detailed simulation based on the quantum master equation for a part of a surface code. The classical computer 100 then converts a CPTP map obtained by the simulation into a noise model that is able to be efficiently computed in a large-scale simulation system. Then, the classical computer 100 performs a quantum error correction simulation of the surface code using the converted noise model.

For example, attention is focused on noise acting on a [[4,2,2]] code that shares the same syndrome measurement circuit as the surface code and that is constructed with a smaller number of physical qubits. Hereinafter, a noise model for analyzing noise acting on the [[4,2,2]] code is referred to as a seven-qubit noise model. The [[4,2,2]] code allows for syndrome measurement using a syndrome measurement circuit similar to that used for the surface code.

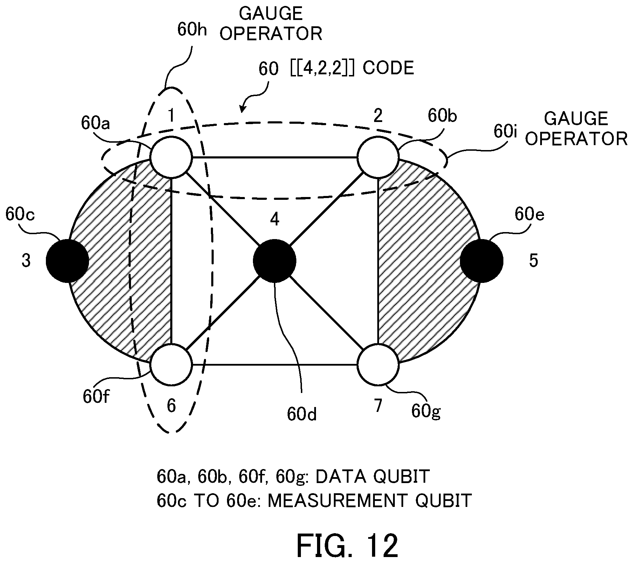

FIG. 12 illustrates an example of a [[4,2,2]] code. A [[4,2,2]] code 60 is a code with a code distance "2", which encodes "two" logical qubits with "four" data qubits 60a, 60b, 60f, and 60g. The [[4,2,2]] code 60 uses three measurement qubits 60c to 60e. In the [[4,2,2]] code 60, the measurement qubits 60c and 60e at both ends are used for Z stabilizer measurement, and the measurement qubit 60d at the center is used for X stabilizer measurement.

In the example of FIG. 12, a qubit number is indicated next to each qubit constituting the [[4,2,2]] code 60. The qubit number of the data qubit 60a is "1". The qubit number of the data qubit 60b is "2". The qubit number of the measurement qubit 60c is "3". The qubit number of the measurement qubit 60d is "4". The qubit number of the measurement qubit 60e is "5". The qubit number of the data qubit 60f is "6". The qubit number of the data qubit 60g is "7".

Among the qubits constituting the [[4,2,2]] code 60, the data qubits 60a and 60f constitute one gauge operator 60h. The data qubits 60a and 60b also constitute one gauge operator 60i.

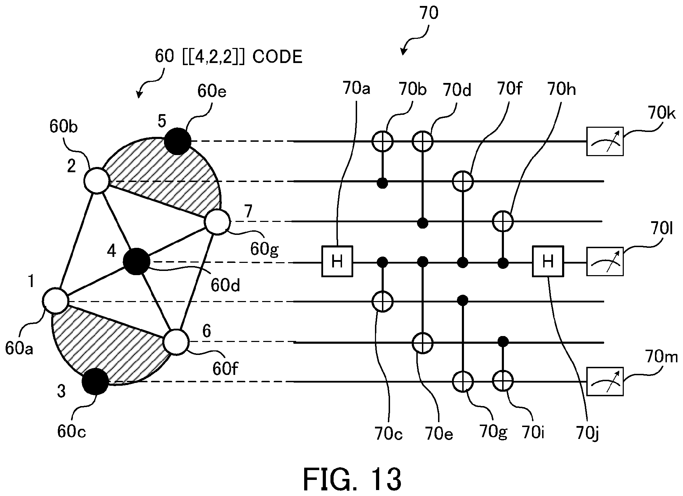

FIG. 13 illustrates an example of a syndrome measurement circuit for a [[4,2,2]] code in which a measurement qubit for X stabilizer measurement is located at the center. In a syndrome measurement circuit 70 for the [[4,2,2]] code 60, a Hadamard gate 70a to be applied to the measurement qubit 60d for X stabilizer measurement is first arranged.

Next, two CNOT gates 70b and 70c are arranged. The CNOT gate 70b uses the data qubit 60b as a control qubit and uses the measurement qubit 60e for Z stabilizer measurement as a target qubit. The CNOT gate 70c uses the measurement qubit 60d for X stabilizer measurement as a control qubit and uses the data qubit 60a as a target qubit.

Next, two CNOT gates 70d and 70e are arranged. The CNOT gate 70d uses the data qubit 60g as a control qubit and uses the measurement qubit 60e for Z stabilizer measurement as a target qubit. The CNOT gate 70e uses the measurement qubit 60d for X stabilizer measurement as a control qubit and uses the data qubit 60f as a target qubit.

Next, two CNOT gates 70f and 70g are arranged. The CNOT gate 70f uses the measurement qubit 60d for X stabilizer measurement as a control qubit and uses the data qubit 60b as a target qubit. The CNOT gate 70g uses the data qubit 60a as a control qubit and uses the measurement qubit 60c for Z stabilizer measurement as a target qubit.

Next, two CNOT gates 70h and 70i are arranged. The CNOT gate 70h uses the measurement qubit 60d for X stabilizer measurement as a control qubit and uses the data qubit 60g as a target qubit. The CNOT gate 70i uses the data qubit 60f as a control qubit and uses the measurement qubit 60c for Z stabilizer measurement as a target qubit.

As the last gate operation, a Hadamard gate 70j to be applied to the measurement qubit 60d for X stabilizer measurement is arranged. Measurements 70k to 70m are specified for the three measurement qubits 60c to 60e of the [[4,2,2]] code, respectively.

With the above syndrome measurement circuit 70, an X stabilizer is obtained from a measurement result of the measurement qubit 60d. In addition, Z stabilizers are obtained from the measurement results of the measurement qubits 60c and 60e.

By using the syndrome measurement circuit 70, it is possible to perform the syndrome measurement of the [[4,2,2]] code 60. FIG. 13 illustrates an example of the [[4,2,2]] code 60 in which the measurement qubit 60d for X stabilizer measurement is located at the center. However, the measurement qubit located at the center may be a measurement qubit for Z stabilizer measurement.

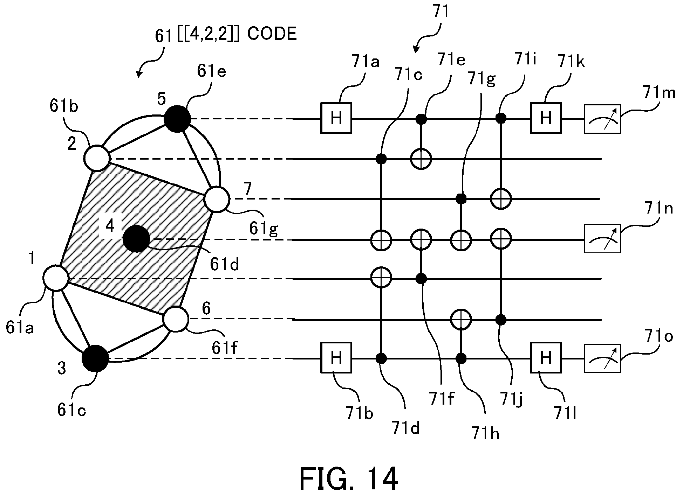

FIG. 14 illustrates an example of a syndrome measurement circuit for a [[4,2,2]] code in which a measurement qubit for Z stabilizer measurement is located at the center. A [[4,2,2]] code 61 includes "four" data qubits 61a, 61b, 61f, and 61g and three measurement qubits 61c to 61e. In the [[4,2,2]] code 61, the measurement qubits 61c and 61e at both ends are used for X stabilizer measurement, and the measurement qubit 61d at the center is used for Z stabilizer measurement.

In a syndrome measurement circuit 71 for the [[4,2,2]] code 61, first, Hadamard gates 71a and 71b to be applied to the measurement qubits 61c and 61e for X stabilizer measurement, respectively, are arranged.

Next, two CNOT gates 71c and 71d are arranged. The CNOT gate 71c uses the data qubit 61b as a control qubit and uses the measurement qubit 61d for Z stabilizer measurement as a target qubit. The CNOT gate 71d uses the measurement qubit 61c for X stabilizer measurement as a control qubit and uses the data qubit 61a as a target qubit.

Next, two CNOT gates 71e and 71f are arranged. The CNOT gate 71e uses the measurement qubit 61e for X stabilizer measurement as a control qubit and uses the data qubit 61b as a target qubit. The CNOT gate 71f uses the data qubit 61a as a control qubit and uses the measurement qubit 61d for Z stabilizer measurement as a target qubit.

Next, two CNOT gates 71g and 71h are arranged. The CNOT gate 71g uses the data qubit 61g as a control qubit and uses the measurement qubit 61d for Z stabilizer measurement as a target qubit. The CNOT gate 71h uses the measurement qubit 61c for X stabilizer measurement as a control qubit and uses the data qubit 61f as a target qubit.

Next, two CNOT gates 71i and 71j are arranged. The CNOT gate 71i uses the measurement qubit 61e for X stabilizer measurement as a control qubit and uses the data qubit 61g as a target qubit. The CNOT gate 71j uses the data qubit 61f as a control qubit and uses the measurement qubit 61d for Z stabilizer measurement as a target qubit.

As the last gate operations, Hadamard gates 71k and 71l to be applied to the measurement qubits 61c and 61e for X stabilizer measurement, respectively, are arranged. Measurements 71m to 71o are specified for the three measurement qubits 61c to 61e of the [[4,2,2]] code, respectively.

With the above syndrome measurement circuit 71, a Z stabilizer is obtained from the measurement result of the measurement qubit 61d. X stabilizers are obtained from the measurement results of the measurement qubits 61c and 61e.

The classical computer 100 defines noise acting on the [[4,2,2]] codes 60 and 61 as a seven-qubit noise model, and performs a detailed simulation of the seven-qubit noise model based on a quantum master equation. By doing so, a CPTP map representing the effects of errors within the seven-qubit noise model is obtained. For a simulation on the scale of the seven-qubit noise model, the computational complexity does not become excessively large.

The classical computer 100 converts the CPTP map of the seven-bit noise model into a noise model that is able to be efficiently computed in a large-scale simulation system. Then, the classical computer 100 performs a quantum error correction simulation of a larger-scale surface code using the converted noise model.

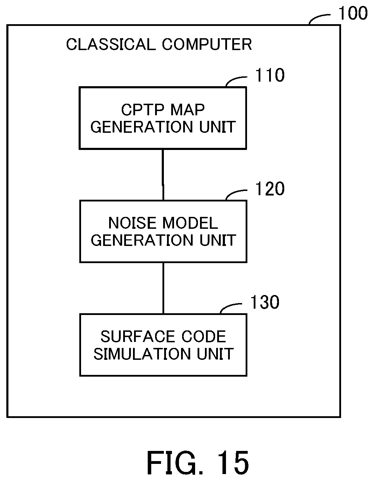

FIG. 15 is a block diagram illustrating an example of functions of the classical computer. The classical computer 100 includes a CPTP map generation unit 110, a noise model generation unit 120, and a surface code simulation unit 130.

The CPTP map generation unit 110 acquires a CPTP map that reflects the noise characteristics of the quantum computer 320. For example, the CPTP map generation unit 110 performs, based on information on an actual device of the quantum computer 320, a detailed time-evolution simulation using a syndrome measurement circuit for a [[4,2,2]] code, and computes the CPTP map from the input-output relationships obtained from the simulation.

The noise model generation unit 120 generates noise that occurs in a seven-qubit noise model, based on the obtained CPTP map.

The surface code simulation unit 130 performs a quantum error correction simulation for an entire surface code using the obtained seven-qubit noise. As a result, for example, a logical error rate in the case where quantum error correction for quantum computation performed by the quantum computer 320 is performed using a surface code is obtained.

Note that the function of each element illustrated in FIG. 15 is implemented, for example, by causing the processor 101 to execute a program module corresponding to that element.

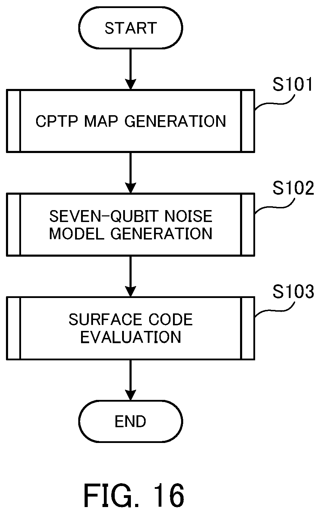

FIG. 16 illustrates an example procedure of a quantum error-correcting code evaluation process. Hereinafter, the process illustrated in FIG. 16 will be described in order of step numbers.

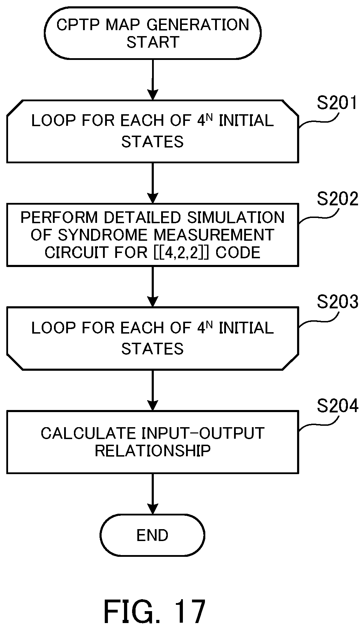

[Step S101] The CPTP map generation unit 110 generates a CPTP map for a syndrome measurement circuit for a [[4,2,2]] code, based on device information indicating characteristics of the quantum computer 320. Details of the CPTP map generation process will be described later (see FIG. 17).

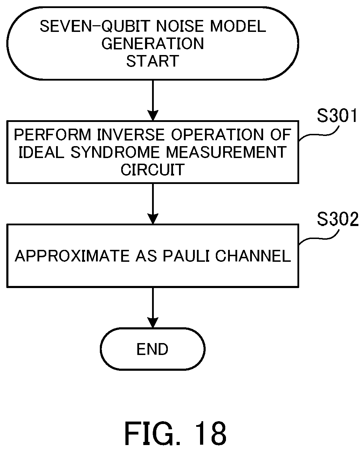

[Step S102] The noise model generation unit 120 generates a seven-qubit noise model based on the CPTP map. Details of the seven-qubit noise model generation process will be described later (see FIG. 18).

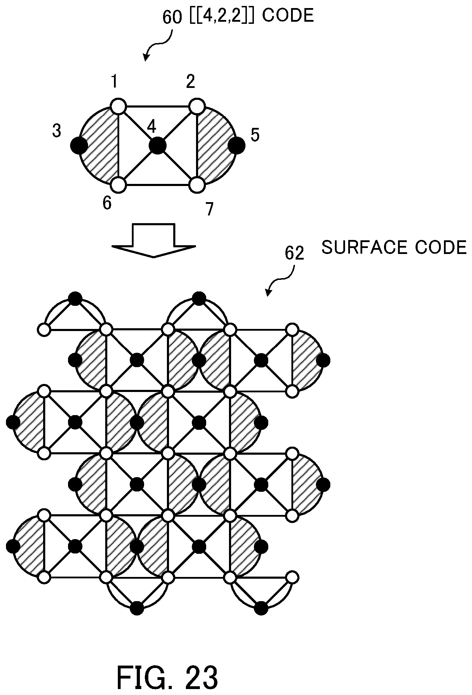

[Step S103] The surface code simulation unit 130 performs a surface code evaluation process by applying noise based on the seven-qubit noise model. Details of the surface code evaluation process will be described later (see FIG. 23).

With the above process, it is possible to perform an evaluation of a large-scale surface code while accurately reflecting the influence of noise that actually occurs.

FIG. 17 is a flowchart illustrating an example procedure of the CPTP map generation process. Hereinafter, the process illustrated in FIG. 17 will be described in order of step numbers.

[Step S201] The CPTP map generation unit 110 sets, as initial states, 4^{N} density operators (quantum states) (N denotes the number of qubits in the syndrome measurement circuit), and repeats step S202 for each initial state.

[Step S202] The CPTP map generation unit 110 performs a detailed simulation (rigorous time-evolution simulation) of the syndrome measurement circuit for the [[4,2,2]] code. Specifically, the CPTP map generation unit 110 sets an initial state for each qubit of the [[4,2,2]] code, and performs a time-evolution simulation to calculate the changes of the state of each qubit under gate operations according to the syndrome measurement circuit, thereby obtaining an output quantum state.

The time-evolution simulation is an analysis using a quantum master equation, and is calculated by solving the differential equation given by Expression (1). This calculation is performed while accurately incorporating the influence of noise derived from relaxation or residual interactions in the quantum computer 320. For example, device parameters indicating characteristics of the quantum computer 320 are set as the relaxation rates γᵢ of the differential equation.

The CPTP map generation unit 110 may also instruct the quantum computer system 300 to perform quantum computation corresponding to the syndrome measurement circuit for the [[4,2,2]] code and obtain an output state corresponding to the initial state as a result of the quantum computation performed by the quantum computer 320. By using the calculation results obtained from the actual device, it is possible to obtain an output state that reflects the influence of all noise generated in the actual device.

[Step S203] When the calculation in step S202 is completed for all the 4^{N} initial states, the CPTP map generation unit 110 advances the process to step S204.

[Step S204] The CPTP map generation unit 110 calculates the input-output relationship of the syndrome measurement circuit for the [[4,2,2]] code. For example, the CPTP map generation unit 110 computes a CPTP map that produces an output state corresponding to each of the 4^{N} initial states.

In this way, the CPTP map for the syndrome measurement circuit for the [[4,2,2]] code is obtained. The obtained CPTP map accurately reflects the influence of noise that occurs in the quantum computer 320.

FIG. 18 is a flowchart illustrating an example procedure of the seven-qubit noise model generation process. Hereinafter, the process illustrated in FIG. 18 will be described in order of step numbers.

[Step S301] The noise model generation unit 120 performs an inverse operation of an ideal syndrome measurement circuit for the [[4,2,2]] code to obtain a CPTP map representing noise components extracted from the syndrome measurement circuit.

[Step S302] The noise model generation unit 120 approximates the CPTP map representing the noise components as a process (Pauli channel) in which stochastic Pauli errors are applied.

As a result, a Pauli channel in the syndrome measurement circuit for the [[4,2,2]] code is obtained. This Pauli channel formulates the seven-qubit noise model.

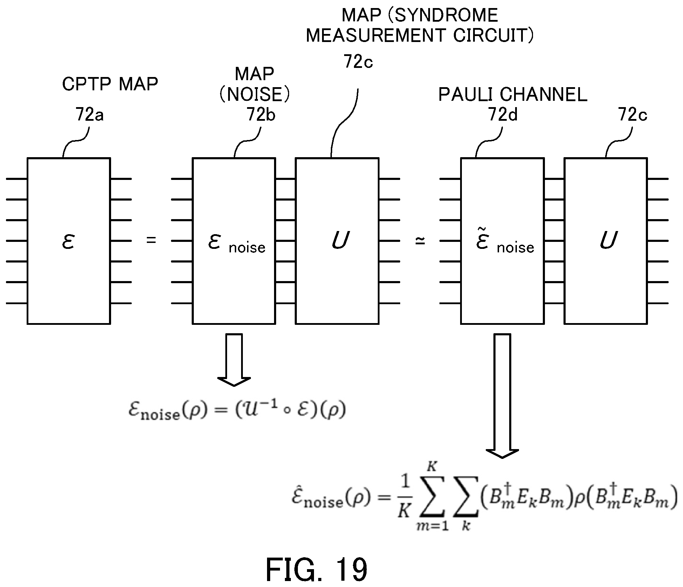

FIG. 19 illustrates an example of a Pauli channel. Let "ε(ρ)" denote a CPTP map 72a obtained by the CPTP map generation unit 110. The CPTP map 72a is expressed by a tensor product of a map 72b representing the influence of noise that occurs during execution of a syndrome measurement circuit and a map 72c representing the operation of the syndrome measurement circuit in the absence of noise. Here, let "εₙₒᵢₛₑ(ρ)" denote the map 72b corresponding to noise, and "U(p)" denote the map 72c corresponding to the syndrome measurement circuit without noise. In this case, the map 72b corresponding to noise, "εₙₒᵢₛₑ(ρ)". is expressed by the following equation. ${ε}_{noise} \left(ρ\right) = \left({U}^{- 1}∘ε\right) \left(ρ\right)$ (2)

By transforming Expression (2) into an approximate equation using the Pauli-twirling approximation, the following equation is obtained. ${{ε}^{˜}}_{noise} \left(ρ\right) = \frac{1}{K} {\sum }_{m = 1}^{K} {\sum }_{k} \left({B}_{m}^{†}{E}_{k}{B}_{m}\right) ρ \left({B}_{m}^{†}{E}_{k}{B}_{m}\right)$ (3)

Bₘ denotes an m-th Pauli operator (m is a natural number). Eₖ denotes a k-th Kraus operator (k is a natural number). K denotes the total number of Pauli operators (4^{N}). In Expression (3), "εₙₒᵢₛₑ (ρ)" (ε has ~) represents a Pauli channel 72d.

Here, the Pauli-twirling approximation is a technique for approximating a CPTP map as a process (i.e., a Pauli channel 72d) in which Pauli operators are stochastically applied. In discussions about quantum error correction, Pauli operators that are stochastically applied are referred to as Pauli errors, which correspond to bit-flip errors or phase-flip errors occurring in qubits.

The Pauli-twirling approximation for the CPTP map "ε(ρ)" is as follows. $\begin{matrix}{ε}_{noise} \left(ρ\right) = {\sum }_{k} {E}_{k} {ρE}_{k}^{†} \to {{ε}^{˜}}_{noise} \left(ρ\right) = \frac{1}{{4}^{N}} {\sum }_{m = 1}^{{4}^{N}} {\sum }_{k} \left({B}_{m}^{†}{E}_{k}{B}_{m}\right) ρ \left({B}_{m}^{†}{E}_{k}{B}_{m}\right) \\ = {\sum }_{j = 1}^{{4}^{N}} {p}_{j} {B}_{j} {ρB}_{j}\end{matrix}$ (4)

Here, pⱼ denotes the probability that a Pauli error represented by the j-th Pauli operator "Bⱼ" (j is a natural number) is applied.

The reason for employing the Pauli-twirling approximation is as follows.

A syndrome measurement circuit is a quantum circuit having the property that it does not create superpositions of bit-flip errors and phase-flip errors, but only changes error types. In the case where quantum errors that occur include only bit-flip errors and phase-flip errors, the classical computer 100 only needs to perform the time-evolution simulation of errors represented by a 2N-dimensional vector at most by using the Pauli-twirling approximation.

Such a time-evolution simulation may be executed more efficiently than a time-evolution simulation of a quantum state represented by a 2^{N}-dimensional vector. The use of the Pauli-twirling approximation in this manner significantly improves computational efficiency. It is known as the Gottesman-Knill theorem that efficient simulation becomes possible by using the Pauli-twirling approximation.

Based on Expression (4), the Pauli error occurrence probability pⱼ for each qubit in the case where the syndrome measurement circuit is executed on the quantum computer 320 is obtained.

Hereinafter, a method for calculating the Pauli error occurrence probability pⱼ will be described in detail.

A CPTP map εₙₒᵢₛₑ relating to noise is represented by a Pauli transfer matrix εᵢⱼ. Let dᵢ denote the diagonal elements of the Pauli transfer matrix εᵢⱼ. The Pauli transfer matrix represents how the CPTP map transforms a Pauli operator into a linear combination of Pauli matrices.

The elements of the Pauli transfer matrix are represented by the weights of the linear combination, and are calculated using the trace (the sum of the diagonal elements of the matrix) as follows. ${ε}_{ij} = tr \left\{{B}_{i}⋅ε\left({B}_{j}\right)\right\} = tr \left\{{B}_{i}{\sum }_{k} {E}_{k} {B}_{j} {E}_{k}^{†}\right\}$ (5)

On the other hand, the CPTP map representing a Pauli channel has the following input-output relationship. $ε \left({B}_{i}\right) ∝ {B}_{i} , {ε}_{ij} = \left\{\begin{matrix}{d}_{i} , & i = j \\ 0 , & i \neq j\end{matrix}\right.$ (6)

It is seen from Expression (6) that the Pauli transfer matrix becomes a Pauli channel if the non-diagonal elements of the obtained Pauli transfer matrix are ignored. That is, representing a CPTP map as a Pauli transfer matrix is equivalent to applying the Pauli-twirling approximation.

Next, the transformation relationship Aᵢⱼ between the diagonal element dᵢ of the Pauli transfer matrix and the error occurrence probability pⱼ is given as follows. $\begin{matrix}ε \left({B}_{i}\right) = {\sum }_{j} {p}_{j} {B}_{j} {B}_{i} {B}_{j} \\ = {\sum }_{j} {p}_{j} \left(\left[{B}_{j}, {B}_{i}\right]+{B}_{i}{B}_{j}\right) {B}_{j} \\ = {\sum }_{j} {p}_{j} \left(\left[{B}_{j}, {B}_{i}\right]{B}_{j}+{B}_{i}\right) \\ = {\sum }_{j} {p}_{j} \left(f\left({B}_{i}, {B}_{j}\right)+1\right) {B}_{i} \left(f\left({B}_{i}, {B}_{j}\right)=\left\{\begin{matrix}0 & \left(\left[{B}_{i}, {B}_{j}\right]=0\right) \\ - 2 & \left(\left[{B}_{i}, {B}_{j}\right]\neq 0\right)\end{matrix}\right.\right) \\ {d}_{i} = {ε}_{ii} = tr \left\{{B}_{i}ε\left({B}_{i}\right)\right\} \\ = tr \left\{{\sum }_{j} {p}_{j} \left(f\left({B}_{i}, {B}_{j}\right)+1\right) I\right\} \\ = {\sum }_{j} {p}_{j} \left(f\left({B}_{i}, {B}_{j}\right)+1\right) \\ = {A}_{ij}\end{matrix}$ (7)

[Bᵢ, Bⱼ] in Expression (7) is referred to as a commutation relationship. For two Pauli operators Bᵢ and Bⱼ, [Bᵢ, Bⱼ] = BᵢBⱼ - Bⱼ, Bᵢ is defined.

Here, the following transformation relationship holds between a vector d having the diagonal element dᵢ as an element and a vector p having the Pauli error occurrence probability pⱼ as an element. $\vec{d} = A \vec{p}$ (8)

Therefore, the Pauli error occurrence probability to be obtained is given by the following equation. $\vec{p} = {A}^{- 1} \vec{d}$ (9)

In this way, using the seven-qubit noise model, the Pauli error occurrence probability for each qubit due to the influence of noise that occurs during execution of the syndrome measurement circuit for the [[4,2,2]] code is accurately obtained.

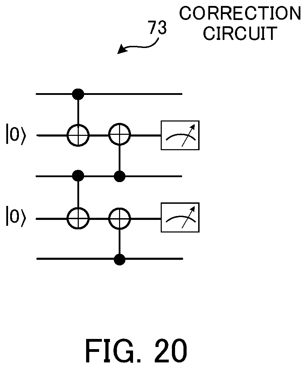

Note that the above example has described a procedure for calculating the Pauli error occurrence probability in the syndrome measurement circuit for the [[4,2,2]] code. However, the Pauli error occurrence probability may also be calculated for other correction circuits in a similar manner. The following describes an example of calculating a Pauli error occurrence probability for a correction circuit for a five-qubit repetition code, with reference to FIGS. 20 to 22.

FIG. 20 illustrates an example of a correction circuit for a five-qubit repetition code. In a correction circuit 73 for the five-qubit repetition code, the first, third, and fifth qubits are data qubits, and the second and fourth qubits are measurement qubits.

The noise model generation unit 120 executes a simulation assuming that the correction circuit 73 for the five-qubit repetition code is executed on the quantum computer 320, and computes a CPTP map.

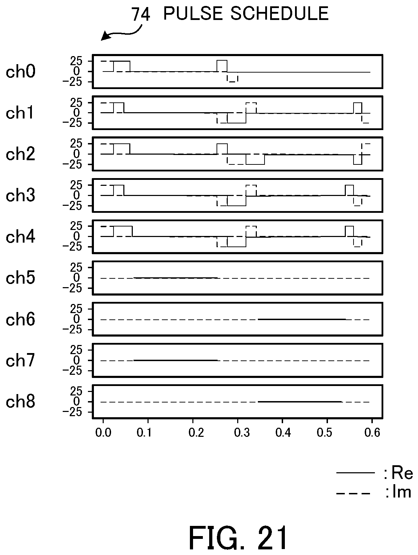

FIG. 21 illustrates an example of a pulse schedule for actual device operations. For example, the noise model generation unit 120 simulates gate operations on qubits according to a pulse schedule 74. In the pulse schedule 74, ch0 to ch4 each correspond to a qubit and represent gate operations on the corresponding qubit. Ch5 to ch8 correspond to connectivity relationships between two qubits and represent gate operations on the connected two qubits. Solid lines indicate the real part of the pulses used for gate operations, and broken lines indicate the imaginary part of the pulses used for gate operations.

The noise model generation unit 120 computes a CPTP map by simulating actual device operations according to the pulse schedule 74. The noise model generation unit 120 creates Pauli noise from the obtained CPTP map, and calculates a Pauli error occurrence probability for each qubit.

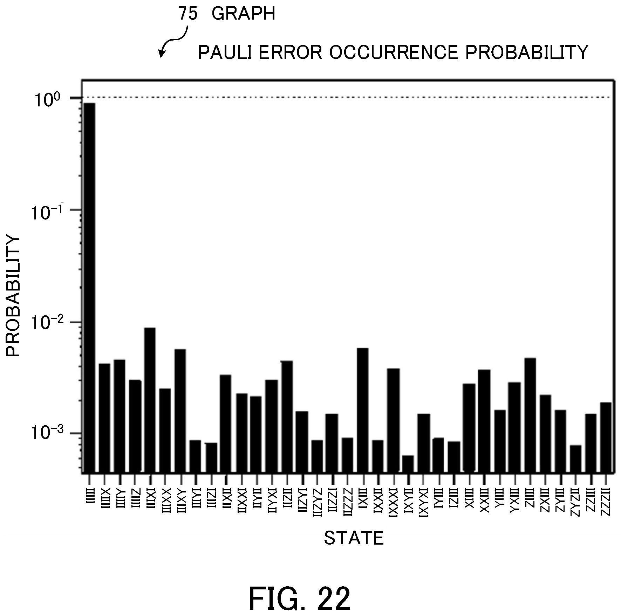

FIG. 22 illustrates an example of calculated Pauli error occurrence probabilities. The horizontal axis of a graph 75 represents output states of five qubits after the gate operations of the correction circuit 73. If no Pauli error has occurred, an output state is "IIIII". However, Pauli errors occur due to the influence of noise, and states other than "IIIII" also appear. In the example of the graph 75, correlated Pauli errors occur across the qubits.

As described above, for a small-scale quantum circuit (for example, a syndrome measurement circuit), it is possible to accurately calculate Pauli error occurrence probabilities based on a CPTP map reflecting noise that occurs when the circuit is executed on an actual device. By evaluating a surface code using the Pauli error occurrence probabilities calculated in this manner, it becomes possible to evaluate even a large-scale surface code while accurately reflecting the influence of noise in the actual device.

FIG. 23 illustrates an example of a surface code represented by a set of [[4,2,2]] codes in which a measurement qubit for X stabilizer measurement is located at the center. As illustrated in FIG. 23, [[4,2,2]] codes 60, each having a measurement qubit for X stabilizer measurement at the center, are spread within a surface code 62. Note that adjacent [[4,2,2]] codes 60 share a qubit located at a portion where the codes are in contact.

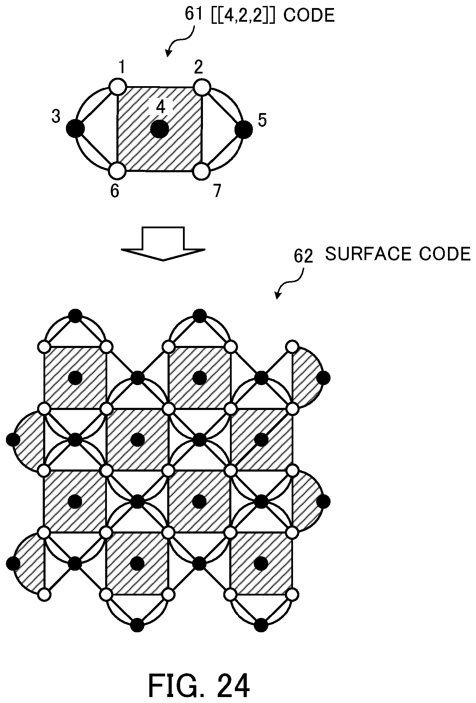

FIG. 24 illustrates an example of a surface code represented by a set of [[4,2,2]] codes in which a measurement qubit for Z stabilizer measurement is located at the center. As illustrated in FIG. 24, [[4,2,2]] codes 61, each having a measurement qubit for Z stabilizer measurement at the center, are spread within a surface code 62.

As illustrated in FIGS. 23 and 24, the surface code simulation unit 130 represents the surface code 62 by arranging the two types of [[4,2,2]] codes 60 and 61. Then, the surface code simulation unit 130 applies a Pauli channel "εₙₒᵢₛₑ" (ε has ~) representing a noise process of the seven-qubit noise model to each qubit located at a corresponding position on the surface code 62. Since a plurality of Pauli errors introduced by noise commute with each other, the Pauli channel "εₙₒᵢₛₑ" (ε has ~) may be applied in any order.

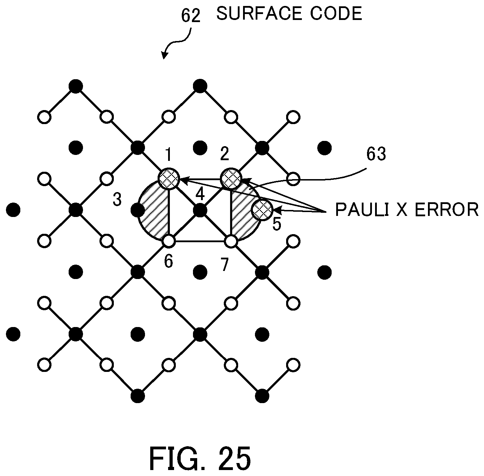

FIG. 25 illustrates an example of generated bit-flip errors. In the example of FIG. 25, it is assumed that the [[4,2,2]] codes 60, each having a measurement qubit for X stabilizer measurement at the center, are spread within the surface code 62. The surface code simulation unit 130 introduces errors in qubits according to the Pauli error occurrence probability of each qubit, which are obtained by applying the Pauli channel "εₙₒᵢₛₑ" (ε has ~) representing a noise process of the seven-qubit noise model. In the example of FIG. 25, Pauli X errors (bit-flip errors) occur on the first, third, and seventh qubits in the [[4,2,2]] code 63.

The surface code simulation unit 130 performs an error detection and error correction process (surface code simulation) for the introduced errors according to an error detection and correction algorithm based on syndrome measurements of the surface code. If the errors are successfully corrected in the surface code simulation, the surface code simulation unit 130 determines that no logical error occurs based on the introduced errors. If the errors are not corrected in the surface code simulation, the surface code simulation unit 130 determines that a logical error occurs.

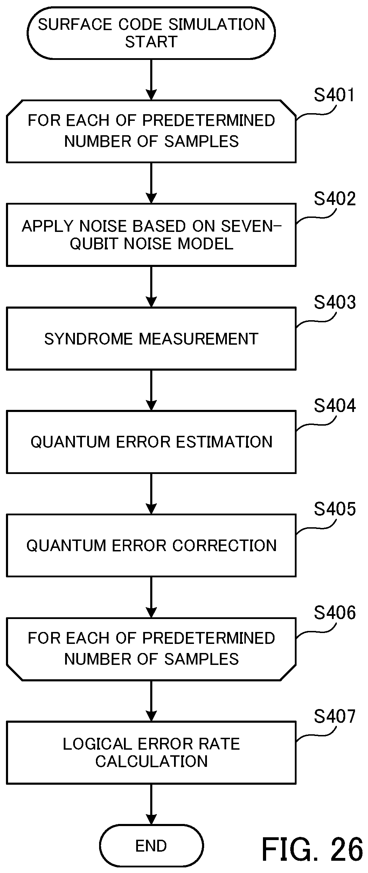

FIG. 26 is a flowchart illustrating an example procedure of a surface code simulation. Hereinafter, the process illustrated in FIG. 26 will be described in order of step numbers.

[Step S401] The surface code simulation unit 130 executes steps S402 to S405 for a predetermined number of samples.

[Step S402] The surface code simulation unit 130 applies noise based on a seven-qubit noise model to each of the [[4,2,2]] codes spread within a surface code. By applying the noise, Pauli errors occur in qubits in a [[4,2,2]] code according to Pauli error occurrence probabilities based on a Pauli channel. TA state of the plurality of qubits constituting the surface code after the application of the noise based on the seven-qubit noise model is one sample for attempting error correction using the surface code.

[Step S403] The surface code simulation unit 130 performs a simulation of syndrome measurement for the surface code. For example, the surface code simulation unit 130 calculates the states of the measurement qubits after executing the syndrome measurement circuit for the surface code.

[Step S404] The surface code simulation unit 130 estimates qubits in which quantum errors have occurred, based on the states of the measurement qubits according to a surface code error detection algorithm.

[Step S405] The surface code simulation unit 130 performs a quantum error correction process on the qubits estimated to have the quantum errors.

[Step S406] When the attempts of error correction using the surface code have been completed for the predetermined number of samples, the surface code simulation unit 130 advances the process to step S407.

[Step S407] The surface code simulation unit 130 calculates a logical error rate. That is, the surface code simulation unit 130 determines whether the quantum error correction have succeeded or failed for each sample.

For example, if the state of a logical bit represented by the surface code after quantum error correction is consistent with the state expected in the case where no error occurs, the surface code simulation unit 130 determines that the correction is successful. If, even after quantum error correction, the state of the logical bit represented by the surface code is not consistent with the state expected in the case where no error occurs, the surface code simulation unit 130 determines that the correction has failed. Then, the surface code simulation unit 130 calculates, as the logical error rate, a value by dividing the number of samples for which the quantum error correction has failed by the total number of samples.

In this way, even for a large-scale surface code, it is possible to calculate the logical error rate while accurately reflecting noise in the actual device.

The following describes results of investigating the logical error probability by performing surface code simulations in the case where correlated Pauli errors occur in data qubits among the errors of the seven-qubit noise model.

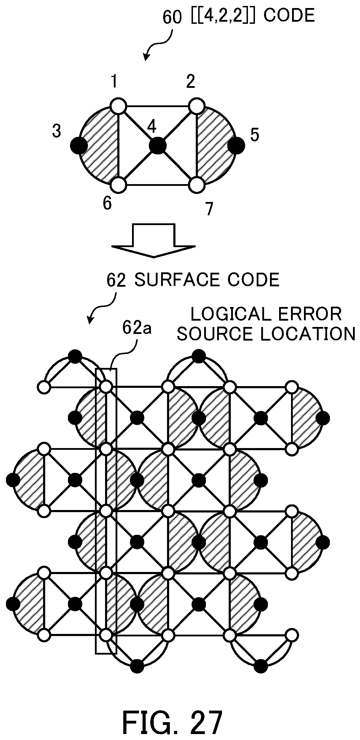

FIG. 27 illustrates an example of a logical error occurrence state. For example, it is assumed that the [[4,2,2]] codes 60, each having a measurement qubit for X stabilizer measurement at the center, are spread within the surface code 62, and the surface code 62 is evaluated. In this case, if Pauli errors occur in all data qubits arranged in a vertical row, the error correction fails. That is, the vertical row of the data qubits in which Pauli errors have occurred becomes a logical error source location 62a.

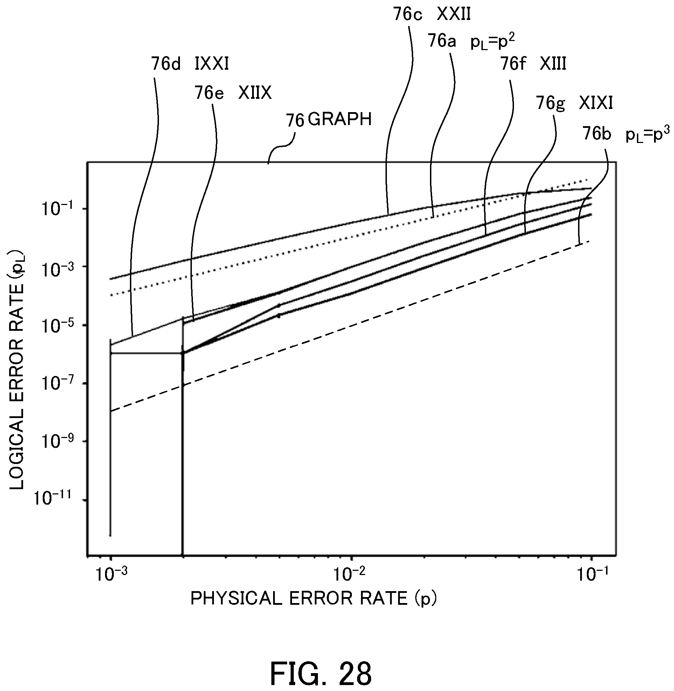

The logical error rate depends on the input state of the data qubits and the physical error rate. The results of investigating the logical error rate will be described with reference to FIG. 28.

FIG. 28 illustrates the relationships between physical error rates and logical error rates. A graph 76 represents the relationships between error patterns occurring in an X stabilizer measurement circuit and logical error rates. The horizontal axis of the graph 76 represents the physical error rate (p), and the vertical axis thereof represents the logical error rate (p_{L}). In the graph 76, a dotted line 76a is a line defined by "p_{L} = p²". A dotted line 76b is a line defined by "p_{L} = p³".

A solid line 76c represents the relationship between the physical error rate and the logical error rate in the case where the error pattern in the stabilizer measurement circuit is "XXII". A solid line 76d represents the relationship between the physical error rate and the logical error rate in the case where the error pattern in the stabilizer measurement circuit is "IXXI". A solid line 76e represents the relationship between the physical error rate and the logical error rate in the case where the error pattern in the stabilizer measurement circuit is "XIIX". A solid line 76f represents the relationship between the physical error rate and the logical error rate in the case where the error pattern in the stabilizer measurement circuit is "XIII". A solid line 76g represents the relationship between the physical error rate and the logical error rate in the case where the error pattern in the stabilizer measurement circuit is "XIXI". Each error pattern indicates that an X error occurs in a qubit corresponding to "X".

It is clear from the evaluation results of the surface code that some correlated errors induce logical errors, thereby increasing the probability of failure in quantum error correction. For example, in the graph 76, for the error pattern "XXII", the degree of decrease in the logical error is smaller than that for the other error patterns, even when the physical error rate decreases. This indicates that correlated errors between the first and second qubits in "XXII" induce a logical error.

As described above, the classical computer 100 is able to obtain an estimated value of the quantum error-correcting performance using an actual quantum device, by using a noise model that enables efficient simulation even for a large-scale quantum error-correcting code system. Since the quantum error-correcting performance is efficiently evaluated, it becomes possible to efficiently perform an evaluation that incorporates the effects of residual interactions (for example, always-on ZZ interactions) between qubits to which no quantum gates are applied.

The above description is merely indicative of the principles of the embodiments. A wide variety of modifications and changes may also be made by those skilled in the art. The embodiments are not limited to the precise configurations and example applications indicated and described above, and all appropriate modifications and equivalents are regarded as falling within the scope of the embodiments as defined by the appended patent claims and their equivalents.

### Reference Signs List

1 Quantum computer
2. Device information
3 Second quantum error-correcting code
4 Input-output information
5 First map
6 Second map
6a Pauli channel
7 Third map
8 First quantum error-correcting code
10 Information processing apparatus
11 Storage unit
12 Processing unit

## Claims

1. A quantum error-correcting code evaluation program that causes a computer to perform a process comprising:
generating, based on input-output information indicating a correspondence between an input state and an output state including an influence of noise in a syndrome measurement of a second quantum error-correcting code, a first map that transforms the input state for the syndrome measurement into the output state, the second quantum error-correcting code having a configuration identical to a configuration of a part of a first quantum error-correcting code to be evaluated;
generating a second map by extracting a magnitude of the influence exerted by the noise from the first map;
generating the first quantum error-correcting code formed of a plurality of second quantum error-correcting codes including the second quantum error-correcting code; and
applying the noise generated in accordance with the second map to each of the second quantum error-correcting codes forming the first quantum error-correcting code, and evaluating an error-correcting performance of the first quantum error-correcting code against a quantum error caused by the influence of the noise.

2. The quantum error-correcting code evaluation program according to claim 1, wherein the process further includes acquiring the input-output information by performing a time-evolution simulation that simulates the syndrome measurement of the second quantum error-correcting code on a quantum computer.

3. The quantum error-correcting code evaluation program according to claim 1, wherein the generating of the second map includes generating the second map by applying an inverse operation of the syndrome measurement to the first map.

4. The quantum error-correcting code evaluation program according to claim 1, wherein the generating of the second map includes approximating the second map as a Pauli channel representing a process in which a stochastic Pauli error is applied.

5. The quantum error-correcting code evaluation program according to claim 4, wherein the evaluating of the performance of the first quantum error-correcting code includes calculating, based on the Pauli channel, an occurrence probability of a Pauli error caused by the noise occurring in each of the plurality of second quantum error-correcting codes, and evaluating the performance of the first quantum error-correcting code based on whether a logical error occurs upon application of the Pauli error to a qubit included in the first quantum error-correcting code according to the calculated occurrence probability of the Pauli error.

6. The quantum error-correcting code evaluation program according to claim 1, wherein the generating of the first map includes using a surface code as the first quantum error-correcting code to be evaluated and using a [[4,2,2]] code as the second quantum error-correcting code, the [[4,2,2]] code having a configuration identical to a configuration of a part of the surface code.

7. A quantum error-correcting code evaluation method executed by a computer, the method comprising:
generating, based on input-output information indicating a correspondence between an input state and an output state including an influence of noise in a syndrome measurement of a second quantum error-correcting code, a first map that transforms the input state for the syndrome measurement into the output state, the second quantum error-correcting code having a configuration identical to a configuration of a part of a first quantum error-correcting code to be evaluated;
generating a second map by extracting a magnitude of the influence exerted by the noise from the first map;
generating the first quantum error-correcting code formed of a plurality of second quantum error-correcting codes including the second quantum error-correcting code; and
applying the noise generated in accordance with the second map to each of the second quantum error-correcting codes forming the first quantum error-correcting code, and evaluating an error-correcting performance of the first quantum error-correcting code against a quantum error caused by the influence of the noise.

8. An information processing apparatus comprising:
a processing unit for
generating, based on input-output information indicating a correspondence between an input state and an output state including an influence of noise in a syndrome measurement of a second quantum error-correcting code, a first map that transforms the input state for the syndrome measurement into the output state, the second quantum error-correcting code having a configuration identical to a configuration of a part of a first quantum error-correcting code to be evaluated,
generating a second map by extracting a magnitude of the influence exerted by the noise from the first map,
generating the first quantum error-correcting code formed of a plurality of second quantum error-correcting codes including the second quantum error-correcting code, and
applying the noise generated in accordance with the second map to each of the second quantum error-correcting codes forming the first quantum error-correcting code, and evaluating an error-correcting performance of the first quantum error-correcting code against a quantum error caused by the influence of the noise.
